# EUROPÄISCHE PATENTSCHRIFT

(11) **EP 0 495 202 B1**
(45) Veröffentlichungstag und Bekanntmachung des Hinweises auf die Patenterteilung: **24.04.1996**
(21) Anmeldenummer: 91121196.9
(22) Anmeldetag: 10.12.1991
(51) Int. Cl.: G02B 6/26, G02B 6/30, G02B 6/10

(54) **Anordnung zum Umwandeln einer optischen Welle kleiner Fleckweite in eine Welle grösserer Fleckweite**
Device to change an optical wave with a small waist diameter into a wave with a bigger waist diameter
Dispositif pour changer une onde optique avec un petit diamètre du mode en une onde avec un diamètre plus grand

(30) Priorität: 15.01.1991 DE 4100991
(43) Veröffentlichungstag der Anmeldung: 22.07.1992
(73) Patentinhaber: SIEMENS AKTIENGESELLSCHAFT, D-80333 München (DE)
(72) Erfinder: Müller, Gustav, Dr., W-8000 München 50 (DE)

(56) Entgegenhaltungen:
- EP-A- 0 356 872
- US-A- 4 773 720
- APPLIED PHYSICS LETTERS. Bd. 55, Nr. 23, 4. Dezember 1989, NEW YORK US Seiten 2389 - 2391 Y. SHANI ET AL. 'Efficient coupling of a semiconductor laser to an optical fiber by means of a tapered waveguide on silicon'
- PATENT ABSTRACTS OF JAPAN vol. 11, no. 109 (P-564)(2556) 7. März 1987 & JP-A-61 256 305

## Beschreibung

Bei der Ankopplung von Monomodefasern an optische Halbleiterkomponenten ist es aufgrund der unterschiedlichen Fleckdurchmesser oder -weiten zur Erreichung hoher Koppelwirkungsgrade erforderlich, die optischen Moden anzupassen. Dies geschieht üblicherweise durch eine Anordnung von Mikrolinsen, bei deren Aufbau mindestens eine Präzisionsjustierung erforderlich ist.

Die Verwendung von getaperten Wellenleiten ist aus Applied Physics Letters, 55(1989), No. 23, (Shani, Y. et al) bekannt.

Der im Anspruch 1 angegebenen Erfindung liegt das Problem zugrunde, die Modenanpassung unter Verzicht auf optische Linsen zu erreichen.

Die mit der Erfindung erzielten Vorteile bestehen insbesondere darin, daß die Modenanpassung bereits auf einem Halbleiterchip vorgenommen werden kann und daß eine Faser in einfacher Weise, z.B. durch Stoßkopplung oder einen Fasertaper, an ein Halbleiterbauelement angekoppelt werden kann.

Vorteilhafte Ausgestaltungen der Erfindung sind in den Ansprüchen 2 bis 4 angegeben.

Die Erfindung wird in der folgenden Beschreibung anhand der Figuren beispielhaft näher erläutert. Es zeigen:
- Figur 1: ein Beispiel einer erfindungsgemäßen Anordnung in perspektivischer Darstellung,
- Figur 2: einen zentralen Längsschnitt durch die Anordnung nach Figur 1,
- Figur 3: den Längsschnitt nach Figur 2 durch ein gegenüber dem Beispiel nach Figur 1 und 2 in der Schichtstruktur etwas modifiziertes Beispiel der erfindungsgemäßen Anordnung,
- Figuren 4a bis 4d: in nicht abschließender Aufzählung einige Möglichkeiten für die Ausgestaltung erster integriert-optischer Wellenleiter für kleine Fleckweite in Draufsicht auf die Endfläche zum Einkoppeln, und
- Figuren 5a bis 5c: in nicht abschließender Aufzählung einige Möglichkeiten für die Ausgestaltung der zweiten integriert-optischen Wellenleiter für größere Fleckweite in Draufsicht auf die Endfläche zum Auskoppeln der optischen Welle größerer Fleckweite.

Die Figuren sind nicht maßstäblich.

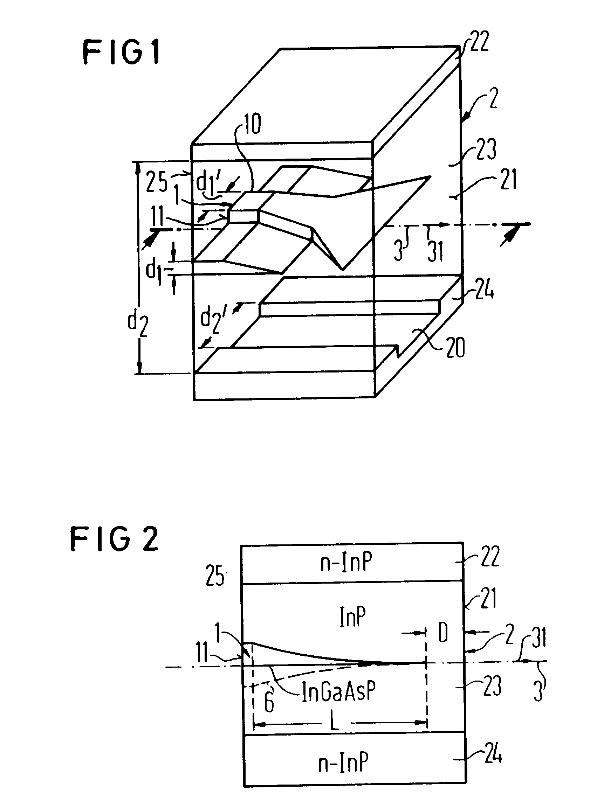

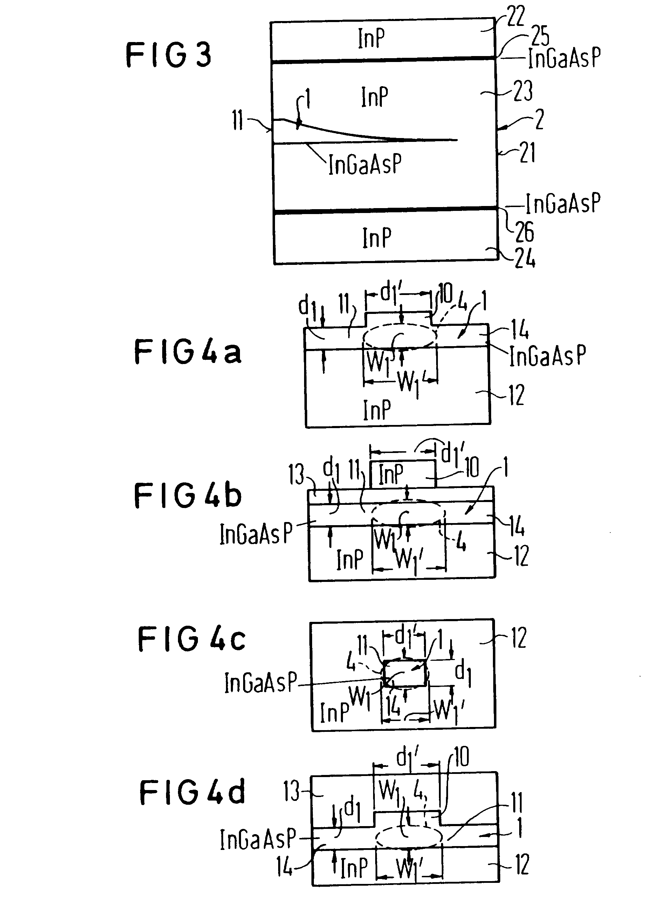

Bei dem Beispiel nach Figur 1 ist der erste integriert-optische Wellenleiter 1 z.B. ein Schichtwellenleiter, wie er in der Figur 4d in Draufsicht auf die Endfläche 11 zum Einkoppeln der optischen Welle kleiner Fleckweite gezeigt ist. Die Dicke d₁ der Schicht 14 des ersten Wellenleiters 1 ist der vertikalen kleinen Fleckweite w₁ des Flecks 4 der einzukoppelnden optischen Welle angepaßt. Die horizontale Breite dieses Wellenleiters ist der horizontalen kleinen Fleckweite w₁' des Flecks 4 der einzukoppelnden Welle angepaßt und durch die Breite d₁' der aus der Schicht 14 nach oben hervorstehenden Rippe 10 definiert.

Schicht 14 und Rippe 10 des Wellenleiters 1 bestehen beispielsweise aus InGaAsP, das eine höhere Brechzahl als das beispielsweise aus InP bestehende Material hat, in das der erste Wellenleiter 1 eingebettet ist.

Aus diesem oder einem solchen Material kleinerer Brechzahl besteht die wellenleitende Schicht 23 des zweiten integriert-optischen Wellenleiters 2, in welcher der erste Wellenleiter 1 angeordnet ist und die diesen ersten Wellenleiter 1 vollständig umgibt.

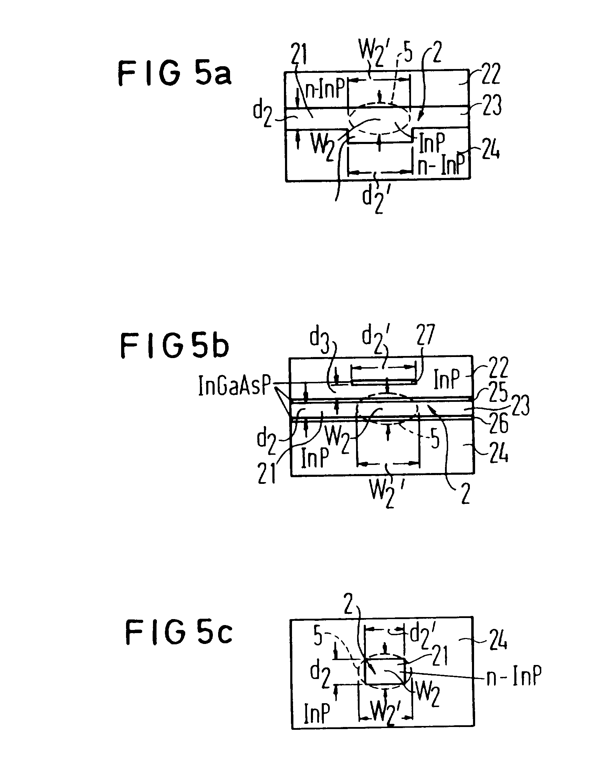

Der zweite Wellenleiter 2 besteht beispielsweise aus dem in Figur 5a in Draufsicht auf die Endfläche 21 zum Auskoppeln der optischen Welle größerer Fleckweite dargestellten Wellenleiter, der aus der zwischen zwei Schichten 22 und 24 aus n-dotiertem InP angeordneten Schicht 23 aus undotiertem InP besteht. Die Dicke d₂ der Schicht 23 ist der vertikalen größeren Fleckweite w₂ des Flecks 5 der auszukoppelnden optischen Welle angepaßt. Die horizontale Breite dieses zweiten Wellenleiters 2 ist der horizontalen größeren Fleckweite w₂' des Flecks 5 der auszukoppelnden Welle angepaßt und durch die Breite d₂' der aus der Schicht 23 nach unten hervorstehenden Rippe 20 definiert.

Die Endfläche 11 zum Einkoppeln der optischen Welle kleinerer Fleckweite des ersten Wellenleiters 1 liegt in einer Endfläche 25 des zweiten Wellenleiters 2. Von dieser Endfläche 25 ist die Endfläche 21 zum Auskoppeln der optischen Welle größerer Fleckweite des zweiten Wellenleiters 2 abgekehrt.

Der erste Wellenleiter 1 endet in einem Abstand D vor der Endfläche 21 zum Auskoppeln der optischen Welle größerer Fleckweite des zweiten Wellenleiters 2 und verjüngt sich von der Endfläche 11 zum Einkoppeln in längsaxialer Richtung 31 zur Endfläche 21 zum Auskoppeln derart, daß der erste Wellenleiter 1 senkrecht zur horizontalen Ebene seiner Schicht 14 und der Schicht 23 des zweiten Wellenleiters 2 kontinuierlich oder stufenweise dünner wird, so wie es in den Figuren 1 bis 3 dargestellt ist. Die Ebene der Schichten 14 und 23 steht in den Figuren 2 und 3 senkrecht zur Zeichenebene und enthält die Längsachse 3 des ersten und zweiten Wellenleiters 1 und 2.

Der sich in der Dicke verjüngende erste Wellenleiter 1 sollte möglichst symmetrisch zur Ebene der Schichten 14 und 23 sein, so wie dies durch die gestrichelte Linie 6 in Figur 2 angedeutet ist.

Eine in Bezug auf diese Ebene etwas unsymmetrische Ausgestaltung, bei welcher der sich verjüngende erste Wellenleiter 1 nur auf einer Seite dieser Ebene, so wie in den Figuren 1 bis 3 dargestellt, ausgebildet ist, ist vielfach technologisch leichter herstellbar und genügt vielfach den praktischen Anforderungen, insbesondere dann, wenn die kleine Fleckweite w₁ gegenüber der größeren Fleckweite w₂ sehr klein, beispielsweise eine odere mehrere Größenordnungen kleiner als die größere Fleckweite w₂ ist. Dies ist beispielsweise der Fall, wenn eine Halbleiterlaserdiode an eine optische Faser, beispielsweise eine Monomode-Faser, anzukoppeln ist.

Während sich die in den sich verjüngenden ersten Wellenleiter 1 eingekoppelte und geführte Welle in der längsaxialen Richtung 31 ausbreitet, weitet sie sich aufgrund des dünner werdenden ersten Wellenleiters 1 auf, bis die Wellenführung vom zweiten Wellenleiter 2 übernommen wird.

Ein Aufweiten der eingekoppelten und geführten Welle senkrecht zur Achse 3 parallel zur Ebene der Schichten 14 und 23 kann durch eine Verbreiterung des ersten Wellenleiters 1 in dieser Richtung erreicht werden, wobei es im Beispiel nach Figur 1 genügt, die Rippe 10 in der längsaxialen Richtung 31 kontinuierlich oder stufenweise zu verbreitern, so wie es in der Figur 1 dargestellt ist.

Die Länge L des sich verjüngenden ersten Wellenleiters 1 in längsaxialer Richtung 31 sollte so gewählt werden, daß die geführten Moden adiabatisch ineinander überführt werden. Ein zu kurzer sich verjüngender Wellenleiter 1 führt zu Abstrahlungsverlusten und zur Anregung höherer Moden. Andererseits vergrößert ein zu langer sich verjüngender erster Wellenleiter 1 die benötigte Chipfläche. Hier läßt sich ein günstiger Kompromiß schließen.

Die Ausführungsform des ersten optischen Wellenleiters 1 richtet sich nach der Art der die einzukoppelnde Welle erzeugenden Komponenten, beispielsweise Laser, Verstärker, Filter und/oder Schalter, die zusammen mit der erfindungsgemäßen Anordnung auf einem gemeinsamen Chip integriert werden können.

Neben der in Figur 4d gezeigten und bei dem Beispiel nach Figur 1 verwendeten Ausführungsform des ersten Wellenleiters 1 sind beispielsweise die in den Figuren 4a bis 4c dargestellten Ausführungsformen des ersten Wellenleiters 1 verwendbar.

Die Ausführungsform nach Figur 4a unterscheidet sich von jener nach Figur 4d durch das Fehlen der in Figur 4d vorhandenen Schicht 13.

Bei der Ausführungsform nach Figur 4b ist die in ihrer Breite d₁' der horizontalen Fleckweite w₁' angepaßte Rippe 10 der Schicht 14 durch eine Schicht 13 getrennt und besteht beispielsweise aus InP.

Bei der Ausführungsform nach Figur 4c ist der Wellenleiter 1 allein durch eine streifenförmige Schicht 14 der Dicke d₁ und Breite d₁' definiert, die vollständig in ein Material 12 eingebettet ist. Beispielsweise besteht die Schicht 14 n-dotiertem InP oder InGaAsP und das umgebende Material 12 aus InP.

Die Ausführungsform des zweiten Wellenleiters 2 richtet sich nach dem an dessen Endfläche 21 anzukoppelnden Bauteil, beispielsweise eine Monomode-Faser. Die Geometrie dieses zweiten Wellenleiters 2 ist so auszulegen, daß die geführte optische Welle möglichst gut an die Monomode-Faser oder ein anderes anzukoppelndes Bauteil angepaßt ist. Neben der Ausführungsform nach Figur 5a sind weitere mögliche Ausführungsformen des zweiten Wellenleiters 2 in den Figuren 5b und 5c dargestellt.

Bei der Ausführungsform nach Figur 5b ist die wellenleitende Schicht 23 durch eine zwischen zwei relativ dazu dünnen Schichten 25 und 26 aus InGaAsP angeordnete Schicht aus InP der Dicke d₂ bestimmt. Die Breite d₂' des zweiten Wellenleiters 2 ist durch eine weitere dünne Schicht 27 aus InGaAsP dieser Breite d₂' bestimmt. Diese Schicht 27 ist in einem Abstand d₃ von der Schicht 23 angeordnet und in eine Schicht 23 aus InP eingebettet, die an die Schicht 25 grenzt. An die Schicht 26 grenzt eine Schicht 24 aus InP.

Das Ausführungsbeispiel nach Figur 3 ist mit einem zweiten Wellenleiter 2 nach Figur 5b realisiert, wobei in der Figur 3 die Schicht 27 in der Schicht 22 nicht gezeichnet ist.

Die Ausführungsform nach Figur 5c entspricht bis auf die Abmessungen der Ausführungsform nach Figur 4c des ersten Wellenleiters 1.

Die Ausführungsformen nach den Figuren 4a bis 4d des ersten Wellenleiters 1 und die Ausführungsformen nach den Figuren 5a bis 5c des zweiten Wellenleiters 2 können beliebig miteinander kombiniert werden, soweit dies mit der technologischen Herstellung vereinbar ist.

## Patentansprüche

1. Anordnung zum Umwandeln einer insbesondere wellenleitergeführten optischen Welle kleiner Fleckweite (w₁) in eine an die Fleckweite (w₂) einer in einem optischen Wellenleiter geführten optischen Welle mit einer relativ zur kleinen Fleckweite (w₁) größeren Fleckweite (w₂) angepaßte optischen Welle, wobei ein erster integriert-optischer Wellenleiter (1) mit einer an die kleine Fleckweite (w₁) angepaßten kleinen Endfläche (11) zum Einkoppeln der im ersten Wellenleiter (1) in einer längsaxialen Richtung (31) zu führenden optischen Welle kleiner Fleckweite (w₁) in den ersten Wellenleiter und ein zweiter integriert-optischer Wellenleiter (2) mit einem an die relativ größere Fleckweite (w₂) angepaßten relativ größeren Querschnitt zum Führen der angepaßten optischen Welle in der längsaxialen Richtung (31) und einer an die relativ größere Fleckweite (w₂) angepaßten relativ größeren Endfläche (21) zum Auskoppeln dieser angepaßten optischen Welle aus dem zweiten Wellenleiter (2) derart achsparallel angeordnet sind, daß der erste Wellenleiter (1) im Inneren des zweiten Wellenleiters (2) angeordnet ist, und wobei der erste Wellenleiter (1) derart gestaltet ist, daß die im ersten Wellenleiter (1) von der kleineren Endfläche (11) in der längsaxialen Richtung (41) zur relativ größeren Endfläche (21) des zweiten Wellenleiters (2) geführte optische Welle kleiner Fleckweite (w₁) in den zweiten Wellenleiter (2) überkoppelt, sich im zweiten Wellenleiter (2) in der längsaxialen Richtung (41) zur relativ größeren Endfläche (21) ausbreitet und zur angepaßten optischen Welle aufweitet, **dadurch gekennzeichnet**, daß sich die Dicke (d₁) des ersten Wellenleiters (1) in Richtung zur relativ größeren Endfläche (2) des zweiten Wellenleiters (2) taperförmig verjüngt.

2. Anordnung nach Anspruch 1, **dadurch gekennzeichnet**, daß sich die Breite (d₁) des ersten Wellenleiters (1) in Richtung zur Endfläche des zweiten Wellenleiters (2) verbreitert.

3. Anordnung nach Anspruch 1 oder 2, **dadurch gekennzeichnet** , daß der erste Wellenleiter (1) im zweiten Wellenleiter (2) in einem Abstand (20) vor der relativ größeren Endfläche (21) des zweiten Wellenleiters (2) endet.

## Claims

1. Arrangement for converting an optical wave, in particular one guided in a waveguide, of small spot width (w₁) into an optical wave matched to the spot width (w₂) of an optical wave which is guided in an optical waveguide with a spot width (w₂) which is larger in relation to the small spot width (w₁), a first integrated-optical waveguide (1), having a small end face (11) matched to the small spot width (w₁) and intended for coupling the optical wave of small spot width (w₁), which is to be guided in the first waveguide (1) in a longitudinally axial direction (31), into the first waveguide, and a second integrated-optical waveguide (2), having a relatively larger cross-section matched to the relatively larger spot width (w₂) and intended for guiding the matched optical wave in the longitudinally axial direction (31), and having a relatively larger end face (21) matched to the relatively larger spot width (w₂) and intended for coupling this matched optical wave out of the second waveguide (2), being arranged axially parallel such that the first waveguide (1) is arranged in the interior of the second waveguide (2), and the first waveguide (1) being configured such that the optical wave of small spot width (w₁), guided in the first waveguide (1) from the smaller end face (11) in the longitudinally axial direction (31) towards the relatively larger end face (21) of the second waveguide (2), is coupled across into the second waveguide (2), is propagated in the second waveguide (2) in the longitudinally axial direction (31) towards the relatively larger end face (21) and spreads to form the matched optical wave, characterized in that the thickness (d₁) of the first waveguide (1) diminishes in a taper shape in the direction of the relatively larger end face (21) of the second waveguide (2).

2. Arrangement according to Claim 1, characterized in that the width (d₁') of the first waveguide (1) broadens in the direction of the end face of the second waveguide (2).

3. Arrangement according to Claim 1 or 2, characterized in that the first waveguide (1) ends in the second waveguide (2) at a distance (20) in front of the relatively larger end face (21) of the second waveguide (2).

## Revendications

1. Dispositif pour changer une onde optique avec un petit diamètre du mode (w₁), guidée en particulier par un guide d'ondes, en une onde optique adaptée au diamètre du mode (w₂) d'une onde optique, guidée dans un guide d'ondes optiques, avec un diamètre du mode (w₂ plus grand par rapport au petit diamètre du mode (w₁), dans lequel un premier guide d'ondes optiques intégré (1) comportant une petite extrémité (11) adaptée au petit diamètre du mode (w₁) en vue de l'injection dans le premier guide d'ondes de l'onde optique avec le petit diamètre du mode (w₁) à guider dans un sens axial longitudinal (31) dans le premier guide d'ondes (1) et un deuxième guide d'ondes optiques intégré (2) présentant une section relativement plus grande adaptée au diamètre du mode relativement plus grand (w₂), destiné à guider l'onde optique adaptée dans le sens longitudinal axial (31) et comportant une extrémité relativement plus grande (21) adaptée au diamètre du mode relativement plus grand (w₂) en vue du prélèvement du deuxième guide d'ondes (2) de cette onde optique adaptée sont disposés parallèlement à l'axe de sorte que le premier guide d'ondes (1) se situe à l'intérieur du deuxième guide d'ondes (2) et dans lequel le premier guide d'ondes (1) est réalisé de sorte que l'onde optique avec le petit diamètre du mode (w₁) qui est guidée dans le premier guide d'ondes (1) de la plus petite extrémité (11) en sens longitudinal axial (41) vers l'extrémité relativement plus grande (21) du deuxième guide d'ondes (2), est surcouplée dans le deuxième guide d'ondes (2), se propage dans le deuxième guide d'ondes (2) dans le sens longitudinal axial (41) vers l'extrémité relativement plus grande (21) et s'élargit en onde optique adaptée, caractérisé en ce que l'épaisseur (d₁) du premier guide d'ondes en direction de l'extrémité relativement plus grande (2) du deuxième guide d'ondes (2) présente un rétrécissement de forme conique.

2. Dispositif selon la revendication 1, caractérisé en ce que la largeur (d₁) du premier guide d'ondes (1) s'élargit en direction de l'extrémité du deuxième guide d'ondes (2).

3. Dispositif selon la revendication 1 ou 2, caractérisé en ce que le premier guide d'ondes (1) se termine dans le deuxième guide d'ondes (2) à une certaine distance (20) avant l'extrémité relativement plus grande (21) du deuxième guide d'ondes (2).
